# EUROPEAN PATENT SPECIFICATION

(11) **EP 0 493 610 B1**
(45) Date of publication and mention of the grant of the patent: **22.06.1994**
(21) Application number: 91913070.8
(22) Date of filing: 17.07.1991
(51) Int. Cl.: B23K 26/02, B23K 26/10

(54) **LASER BEAM GUIDING TUBE IN LASER ROBOT**
LASERSTRAHLFÜHRUNGSROHR EINES LASERROBOTERS
TUBE DE GUIDAGE POUR FAISCEAUX A LASER INSTALLE DANS UN ROBOT A LASER

(30) Priority: 23.07.1990 JP 193106/90
(43) Date of publication of application: 08.07.1992
(73) Proprietor: FANUC LTD., Minamitsuru-gun, Yamanashi 401-05 (JP)
(72) Inventor: TORII, Nobutoshi, Hachioji-shi, Tokyo 192 (JP); TERADA, Akihiro, Fanuc Mansion Harimomi 8-207, Yamanashi 401-05 (JP); SASAKI, Yasuo, Fanuc Mansion Harimomi 8-102, Minamitsuru-gun, Yamanashi401-05 (JP)
(74) Representative: Jackson, Peter Arthur
(86) International application number: JP9100956
(87) International publication number: WO9201529

(56) References cited:
- JP-A- 6 192 794

## Description

The present invention relates to a beam guide tube apparatus for leading a laser beam into a robot machine body in a laser robot from the outside thereof, and more particularly, to a beam guide tube apparatus in a laser robot wherein a laser beam reflecting mirror can be easily mounted in place inside a holder and easily drawn out for maintenance, the mirror being an indispensable member installed inside the holder to introduce into the machine body a laser beam guided through a beam guide tube positioned at the same level as the holder, with respect to the laser robot machine body installed on the holder.

A laser robot is designed to perform a desired laser beam machining by introducing a laser beam generated by a laser light source, which consists of an external laser oscillator, into a robot machine body through a beam guide tube path, and radiating the laser beam from a laser beam emitter having a light focusing lens, which is provided at the end of the robot machine body, to a specified point of a workpiece to be machined by the laser beam. In such a laser robot, to introduce a laser beam able to reach the robot machine body through the beam guide tube path from the laser light source into the machine body, it is necessary to introduce the laser beam into the swiveling center of the robot machine body, and change the course thereof by mirrors installed on individual joints, before leading the laser beam to the laser beam emitter, because most robot machine bodies comprise many moving elements that are joint-connected. Normally, the laser beam led via an external beam guiding path is introduced into the machine body from above or below the swiveling central line of a swiveling assembly of the robot machine body via a laser reflecting mirror, and therefore, a reflecting mirror must be provided at the top or bottom of the robot machine body. A system in which the reflecting mirror is installed at the top of the robot machine body is advantageous in that the installation and maintenance of the mirror is easy, but it is disadvantageous in that the mirror is readily affected by the vibration applied from the outside. On the other hand, a system having the reflecting mirror installed at the bottom of the robot machine body is advantageous in that the influence of such external vibration is reduced. Accordingly, one of the foregoing systems is selected depending on the environment in which the laser robot is operated.

Nevertheless, the system in which the reflecting mirror is installed at the bottom of the machine body of the laser robot, to change the course of a laser beam received from outside and thereby introduce the laser beam into the machine body, has a problem in that it is extremely difficult to install the mirror and to remove same for maintenance. Namely, during the operation of the laser robot, the surface of the mirror must be wiped and polished at regular intervals. Accordingly, there is a strong demand for an improvement of the mounting of the mirror.

An object of the present invention is to provide a beam guide tube apparatus in a laser robot which permits an easy installation and maintenance of the mirror installed inside the holder.

Another object of the present invention is to provide a beam guide tube apparatus in a laser robot by which it is possible to perform maintenance operations such as polishing a mirror, without the need to disconnect the tubes of the cooling water supplied to a mirror unit having the mirror.

According to the present invention there is provided a beam guide tube apparatus on a laser robot in which a laser beam from an external laser beam guide tube is introduced into a robot machine body via a mirror installed inside a holder on which the robot machine body is mounted, the beam guide tube apparatus comprising a mirror enclosure provided in such a manner that it can be withdrawn in the manner of a sliding drawer from a housing position in the holder to a maintenance position; and a mirror unit attached to the mirror enclosure and including the mirror for deflecting the course of the laser beam.

Preferably the apparatus further comprises cooling water tubes supported by the mirror enclosure and connected to the mirror unit, the cooling water tubes having an appropriate length in the holder such that the cooling water tubes can be moved integrally with the mirror enclosure when the mirror enclosure is withdrawn from or reinserted into the holder.

Preferably the apparatus further comprises a mirror angle adjusting device including manual adjusting rings provided on a front surface of the mirror enclosure and eccentric discs by which an angle of a laser beam mirror of the mirror unit is adjusted in response to a rotation of the manual adjusting rings.

Preferably a withdrawing mechanism for the mirror enclosure is composed of a linear guide rail and a guide block provided between the mirror enclosure and the holder.

In the accompanying drawings:
FIG. 1 is a perspective view illustrating a basic composition of a beam guide tube apparatus in a laser robot in accordance with the present invention;
FIG. 2 is a partially sectional view taken along a line II-II of Fig. 1 and schematically illustrating a composition of a guiding device ensuring a smooth withdrawal and reinsertion of a mirror enclosure of the beam guide tube apparatus;
FIG. 3A is a sectional view of a major section illustrating a composition of a mirror angle adjusting device for adjusting the angle of a mirror in a mirror unit;
FIG. 3B is a partial top plan view illustrating a composition of the mirror angle adjusting device for adjusting the angle of the mirror in the mirror unit;
FIG. 4 is a perspective view illustrating a composition of manual adjusting rings and eccentric discs in the mirror angle adjusting device; and
FIG. 5 is an external view illustrating the external configuration of the laser robot equipped with the beam guide tube apparatus in accordance with the present invention, with a partial cross-sectional view.

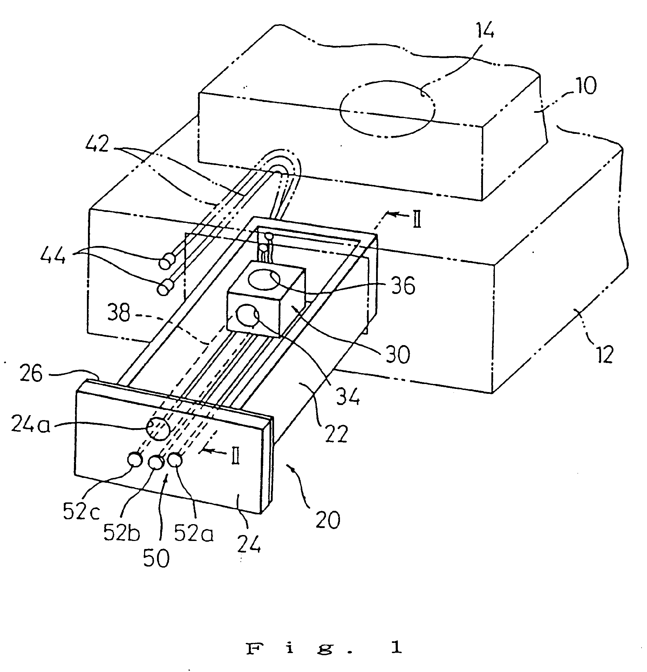

FIG. 1 is the perspective view illustrating the basic composition of the beam guide tube apparatus in the laser robot in accordance with the present invention. A laser robot machine body 10 is installed on a holder, and a mirror enclosure 20 is provided in such a manner that it can be drawn out of the holder 12. The mirror enclosure 20 is composed of a box-type casing 22 and a front panel 24, the inside surface of the front panel being lined with a gasket 26 to provide a tight sealing effect and prevent dust or the like from entering the casing 22 of the mirror enclosure 20 from the outside when the mirror enclosure 20 is housed in the holder 12.

A mirror unit 30 is provided inside the casing 22 in a predesignated position such that it is aligned with an opening 14 running from the holder 12 to a beam guide tube path in the robot machine body 10, when the casing 22 of the mirror enclosure 20 is housed in the holder 12. The mirror unit 30 includes a well-known laser beam reflecting mirror (not shown), and is equipped with a beam inlet opening 34 and a beam outlet opening 36 for a laser beam; the inner end of a beam guide tube 38 indicated with a dotted line being connected to the beam inlet opening 34. The outer end of the beam guide tube 38 is connected to an opening 24a of the front panel 24 of the mirror enclosure 20, and the laser beam leaving a laser oscillator is led to this opening 24a via an external beam guide tube (not shown). At this time, the external beam guide tube is connected to the beam guide tube 38 in the mirror enclosure 20 in such a manner that it is closely fitted but is slidable therein. Accordingly, the laser beam introduced from outside is reflected by the built-in mirror of the mirror unit 30, to thereby change the course of the laser beam, and is introduced into the laser robot machine body 10 via the opening 14 of the holder 12.

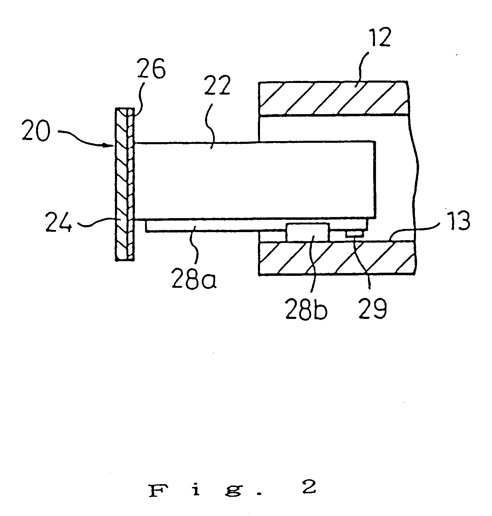

FIG. 2 schematically illustrates the composition of the guiding device ensuring a smooth withdrawal or reinsertion of the mirror enclosure in the beam guide tube apparatus, and is a partial cross-sectional view taken along a line II-II of FIG. 1. The casing 22 of the mirror enclosure 20 is provided with a guide rail 28a (or two guide rails laid out in parallel) on the external bottom surface thereof. This guide rail 28a is engaged with a mating guide (e.g., a well-known guide nut is applicable) 28b installed on a bottom surface 13 of the holder 12, and accordingly, the guide rail is able to guide the casing 22 so that the casing 22 can be smoothly and accurately withdrawn or reinserted. A stopper 29 forms a stopping means preventing the casing 22 from being drawn off the holder 12. Note, obviously the guide rail 28a may be installed on the bottom surface 13 of the holder 12, and the guide 28b installed on the external bottom surface of the casing 22.

Referring back to FIG. 1, the holder 12 is provided inside with tubes 42 having an appropriate flexibility, for circulating cooling water to the mirror unit 30 inside the mirror enclosure 20. The tubes 42 have a sufficient allowance in length inside the holder 12, one end thereof being connected to the mirror unit 30 while the other end being connected to an external cooling water tubes via nipples 44 mounted on a side surface of the holder 12. Thus, since the tubes 42 have an appropriate length inside the holder 12 such that, when the casing 22 of the mirror enclosure 20 is drawn out of the holder 12, the tubes 42 can follow and move integrally with the casing 22, and will not interfere with the casing 22 when it is being withdrawn or reinserted.

Thus, the mirror enclosure 20 incorporating the mirror unit 30 including the mirror for changing the course of a laser beam can be withdrawn from or reinserted to the holder 12, and therefore, a maintenance operation such as polishing the mirror after the laser robot has been operated for a specified time, for example, can be easily performed because access to the mirror in the mirror unit 30 is easily obtained by drawing out the mirror enclosure 20.

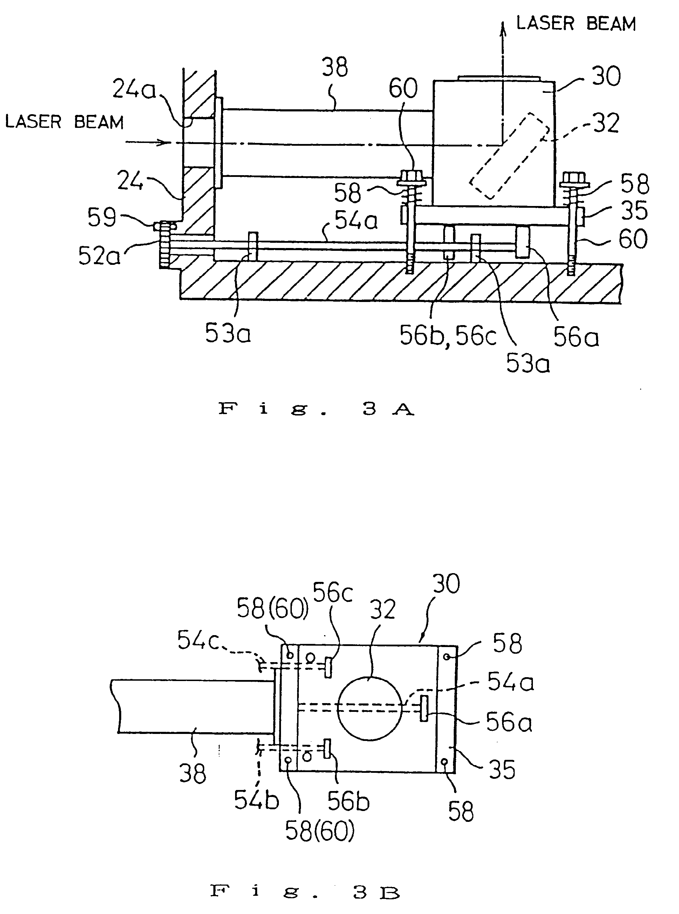

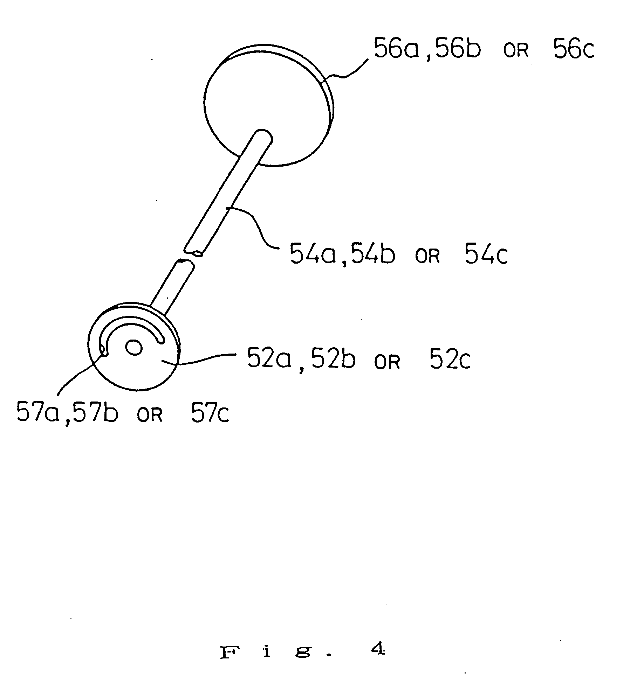

Further, as shown in FIG. 1, on the front panel 24 of the mirror enclosure 20 are provided manual adjusting rings 52a, 52b, and 52c of a mirror angle adjusting device 50, which adjusts the tilting angle of the mirror in the mirror unit 30 for changing the course of the laser beam as necessary, so that the laser beam introduced from outside will be reflected by the mirror in the mirror unit 30, to thereby properly lead the laser beam to the beam guide tube of the robot machine body 10 via the opening 14 of the holder 12. These manual adjusting rings 52a through 52c are connected to respective adjusting rods 54a, 54b, and 54c passing through the casing 22 of the mirror enclosure 20, the other ends of the adjusting rods 54a through 54c being connected to respective eccentric discs, to be discussed later, in contact with the bottom surface of the mirror unit 30 at three points (the number of contacting points may be increased or reduced as necessary). Therefore, when the manual adjusting rings 52a through 52c are turned by hand, to make an adjustment, the tilt angle of the mirror unit 30 is finely adjusted by the eccentric discs, and thus the course of the laser beam is changed to the specified direction. The embodiment of the mirror angle adjusting device 50 for adjusting the tilt angle of the mirror unit 30 is illustrated in FIG. 3A and FIG. 3B. An example showing the manual adjusting rings 52a through 52c, the adjusting rods 54a through 54c, and the eccentric discs 56a through 56c is given in FIG. 4.

FIG. 3A and FIG. 3B are a sectional view of a major section and a partial top plan view, respectively, of the composition of the mirror angle adjusting device used to adjust the angle of the mirror in the mirror unit. In the former drawing, only the manual adjusting ring 52a of the rings 52a through 52c is illustrated. The manual adjusting ring 52a is linked to the eccentric disc 56a via the adjusting rod 54a rotatably supported by an appropriate support 53a, and accordingly, the eccentric disc 56a can be rotated by turning the manual adjusting ring 52a. The eccentric disc 56a is in contact with the bottom surface of a flange plate 35 provided on the bottom of the mirror unit 30, and the flange plate 35 is subjected to a pushing-down force applied by a holding bolt 60 via a spring 58, and therefore, the eccentric disc 56a is always held in contact with the bottom surface of the flange plate 35. An appropriate number of eccentric discs are provided on the bottom side of the flange plate 35. In this embodiment, three eccentric discs 56a through 56c are provided at appropriate intervals (see FIG. 3B, in particular), and therefore, the mirror unit 30 is supported from below by the contact between the eccentric discs 56a through 56c and the flange plate 35. The mirror unit 30 can be finely displaced vertically against the spring force of the pushing-down spring 58, by turning the three eccentric discs 56a through 56c to make an adjustment, and thus it is possible to make a fine adjustment of the angle of the mirror 32 in the mirror unit 30 in any direction in a three-dimensional space.

FIG. 4 is a perspective view illustrating the composition of the manual adjusting rings and the eccentric discs in the mirror angle adjusting device. As shown in the drawing, the manual adjusting ring 56a, 56b or 56c connected to the eccentric disc 56a, 56b or 56c via the adjusting rod 54a, 54b or 54c is provided with an arc slot 57a, 57b or 57c. When a fixing screw 59 (see FIG. 3A) is inserted beforehand in the front panel 24 of the mirror enclosure 20 through the arc slot 57a, 57b or 57c, the manual adjusting rings 52a through 52c can be fixed in the fully adjusted positions thereof by tightening the fixing screw 59 after adjustment, thereby making it possible to fix the eccentric discs 56a through 56c and to maintain the adjusted positions of the mirror unit 30 and the mirror 32 therein after completing the adjustment.

Accordingly, when carrying out maintenance or the like of the mirror unit 30, the angle of the mirror 32 can be easily adjusted from outside, and thus the laser beam introduced into the mirror enclosure 20 from the outside thereof is accurately led to the beam tube path of the robot machine body 10 via the holder 12.

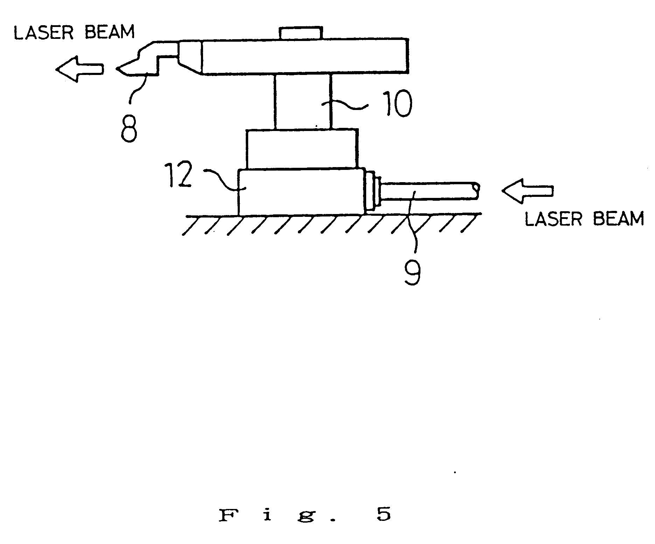

FIG. 5 is an external view illustrating the external configuration of the laser robot equipped with the beam guide tube apparatus with a partial cross-sectional view. In the drawing, the laser beam passes through the external beam guide tube 9, which is level with the holder 12, and reaches the mirror 32 (FIG. 3A) provided in the mirror enclosure inside the holder 12; the mirror 32 changing the course of the beam into the robot machine body 10. The laser beam is further guided to a laser beam emitter 8 via the beam guide tube path in the robot machine body 10, and the laser beam is radiated from the laser beam emitter 8 onto a target workpiece.

In a beam guide tube apparatus introducing a laser beam into a laser robot installed on a holder via an external beam guide tube path, a mirror enclosure with a mirror unit is mounted thereon in such a manner that it can be withdrawn from or reinserted to the holder as necessary, and therefore, when performing a maintenance of a mirror contained in the holder, such as polishing the mirror surface, such maintenance can be easily accomplished by withdrawing the mirror enclosure from the holder, and thereafter, reinserting the mirror thereto. Further, unlike the conventional system, it is not necessary to disconnect the cooling water tubes or the like before withdrawing the mirror enclosure from the holder for a maintenance thereof, to thereby enable a laser robot to be provided with an extremely high maintainability, even though the laser robot is designed such that the laser beam is introduced therein from the bottom of the machine body, the maintenance of which is usually difficult.

Furthermore, it is possible to finely adjust the angle of the mirror as necessary from the outside thereof, by operating manual adjusting rings without the need to withdraw the mirror enclosure from the holder. In this respect also, a laser robot featuring an extremely high adjustability can be obtained.

## Claims

1. A beam guide tube apparatus on a laser robot in which a laser beam from an external laser beam guide tube is introduced into a robot machine body (10) via a mirror (32) installed inside a holder (12) on which the robot machine body is mounted, the beam guide tube apparatus comprising a mirror enclosure (22) provided in such a manner that it can be withdrawn in the manner of a sliding drawer from a housing position in the holder to a maintenance position; and a mirror unit (30) attached to the mirror enclosure and including the mirror for deflecting the course of the laser beam.

2. An apparatus according to claim 1, further comprising cooling water tubes (42) supported by the mirror enclosure (22) and connected to the mirror unit (30), the cooling water tubes having an appropriate length in the holder such that the cooling water tubes can be moved integrally with the mirror enclosure when the mirror enclosure is withdrawn from or reinserted into the holder.

3. An apparatus according to claim 1 or claim 2, further comprising a mirror angle adjusting device including manual adjusting rings (52a,b,c) provided on a front surface (24) of the mirror enclosure (22) and eccentric discs (56a,b,c) by which an angle of a laser beam mirror (32) of the mirror unit (30) is adjusted in response to a rotation of the manual adjusting rings.

4. An apparatus according to any one of the preceding claims, wherein a withdrawing mechanism for the mirror enclosure (22) is composed of a linear guide rail (28a) and a guide block (28b) provided between the mirror enclosure and the holder (12).

## Patentansprüche

1. Strahlführungsrohr-Einrichtung an einem Laserroboter, bei dem ein Laserstrahl von einem externen Laserstrahl -Führungsrohr in ein Robotermaschinengehäuse (10) über einen Spiegel (32) eintritt, der in einem Träger (12) aufgenommen ist, auf dem das Robotermaschinen-Gehäuse befestigt ist, wobei die Strahlführungsrohr-Einrichtung eine Spiegeleinfassung (22) derart aufweist, daß sie nach Art einer Schublade aus einer Innenposition im Träger in eine Wartungsposition herausgezogen werden kann; sowie eine an der Spiegeleinfassung angeordnete Spiegeleinheit (30), die den Spiegel zur Ablenkung des Lasers aufweist.

2. Einrichtung nach Anspruch 1, die ferner Kühlwasserleitungen (42) aufweist, die von der Spiegeleinfassung (22) getragen und mit der Spiegeleinheit (30) verbunden sind, wobei die Kühlwasserleitungen eine passende Länge im Träger derart haben, daß die Kühlwasserleitungen zusammen mit der Spiegeleinfassung bewegt werden können, wenn die Spiegeleinfassung aus dem Träger herausgezogen oder in den Träger zurückgeschoben wird.

3. Einrichtung nach Anspruch 1 oder 2, die ferner eine Nachstelleinrichtung für den Spiegelwinkel aufweist, wobei mit von Hand bedienbaren Knöpfen (52a,b,c) auf der Vorderseite (24) der Spiegeleinfassung (22) und mit Exzenterscheiben (56a, b,c), von denen der Winkel eines Laserstrahlspiegels (32) der Spiegeleinheit (30) abhängig von einem Drehen der Einstellknöpfe einstellbar ist.

4. Einrichtung nach einem der vorhergehenden Ansprüche, bei der ein Mechanismus zum Herausziehen der Spiegeleinfassung (22) aus einer geraden Führungsstange (28a) und einem Führungsblock (28b) zwischen der Spiegeleinfassung und dem Träger (12) besteht.

## Revendications

1. Un appareil à tube de guidage de faisceau sur un robot laser, dans lequel un faisceau laser provenant d'un tube de guidage de faisceau laser externe est introduit dans un corps de machine de robot (10) par l'intermédiaire d'un miroir (32) placé à l'intérieur d'un support (12) sur lequel le corps de machine de robot est monté, l'appareil à tube de guidage de faisceau comprenant une enceinte à miroir (22) prévue de manière telle qu'elle puisse être retirée à la façon d'un tiroir coulissant d'une position de mise en place dans le support à une position d'entretien ; et une unité à miroir (30) fixée à l'enceinte à miroir et comprenant le miroir pour dévier le trajet du faisceau laser.

2. Un appareil selon la revendication 1, comprenant en outre des tubes à eau de refroidissement (42) portés par l'enceinte miroir (22) et reliés à l'unité à miroir (30), les tubes à eau de refroidissement présentant une longueur appropriée dans le support telle que les tubes à eau de refroidissement puissent être déplacés d'un seul tenant avec l'enceinte à miroir quand l'enceinte à miroir est retirée du support ou réinsérée dans le support.

3. Un appareil selon la revendication 1 ou la revendication 2, comprenant en outre un dispositif de réglage de l'angle du miroir comportant des bagues de réglage manuel (52a, b, c) prévues sur une surface avant (24) de l'enceinte à miroir (22) et des disques excentrés (56a, b, c) par lesquels est réglé un angle d'un miroir à faisceau laser (32) de l'unité à miroir (30) en réponse à une rotation des bagues de réglage manuel.

4. Un appareil selon une quelconque des revendications précédentes, dans lequel un mécanisme de retrait pour l'enceinte à miroir (22) est composé d'un rail de guidage linéaire (28a) et d'un bloc de guidage (28b) prévu entre l'enceinte à miroir et le support (12).
